# EUROPÄISCHE PATENTSCHRIFT

(11) **EP 0 672 011 B1**
(45) Veröffentlichungstag und Bekanntmachung des Hinweises auf die Patenterteilung: **22.10.1997**
(21) Anmeldenummer: 94926237.2
(22) Anmeldetag: 03.09.1994
(51) Int. Cl.: B65D 90/34

(54) **LEICHTBAUEXPLOSIONSKLAPPE, INSBESONDERE FÜR ROHRLEITUNGEN**
LIGHTWEIGHT EXPLOSION FLAP, IN PARTICULAR FOR PIPELINES
CLAPET DE PROTECTION CONTRE LES EXPLOSIONS AYANT UNE CONSTRUCTION LEGERE, UTILE NOTAMMENT POUR CANALISATIONS

(30) Priorität: 08.10.1993 DE 4334280
(43) Veröffentlichungstag der Anmeldung: 20.09.1995
(73) Patentinhaber: Thorwesten, Albert, D-59269 Beckum (DE)
(72) Erfinder: Thorwesten, Albert, D-59269 Beckum (DE)
(74) Vertreter: Patentanwälte Meinke, Dabringhaus und Partner
(86) Internationale Anmeldenummer: EP9402941
(87) Internationale Veröffentlichungsnummer: WO9510465

(56) Entgegenhaltungen:
- DE-A- 2 455 325
- DE-A- 3 734 838
- FR-A- 2 292 174
- FR-A- 2 645 515
- US-A- 2 105 735

## Beschreibung

Die Erfindung richtet sich auf eine Vorrichtung zum Ausgleich von Druckstößen bei möglichen Staub- oder Gasexplosionen in geschlossenen Systemen, wie Silos, Rohrleitungen od. dgl., mit einem um eine Schwenkachse an einem Auslaßstutzen verschwenkbaren Klappdeckel, der wenigstens bereichsweise als Hohlkörper ausgebildet ist und eine ebene Außenfläche aufweist, wobei die den Klappdeckel bildenden Wände aus dünnen Metallblechen gebildet sind.

Um auftretende Druckwellen in Behältern über Rohrleitungen abzuleiten, bevor sie z.B. in nachgeschaltete Elemente, wie Filter od. dgl., einschlagen, sind sogenannte Explosionsklappen bekannt, etwa aus der gattungsbildenden DE-A-24 55 325. Aus dieser Druckschrift ist eine Explosionsklappe im wesentlichen rechteckiger Form bekannt mit aus Profileisen gebildeten Randrahmen, zwischen denen eine Deckelfläche als Hohlkörper aus zwei Blechen vorgesehen ist. Diese Deckelkonstruktion ist vergleichsweise schwer und in der dargestellten Bauweise nicht als tellerförmiger Runddeckel gestaltbar.

Weitere Explosionsklappengestaltungen sind bekannt, so aus der DE-A-30 42 026 oder der DE-A-31 06 138. Diese letztgenannte Leichtbauexplosionsklappe hat sich in der Praxis sehr bewährt, insbesondere das System der Dämpfung der Klappe bei deren bestimmungsgemäßem Öffnen. Eine Weiterentwicklung des Dämpfungssystemes zeigt die DE-A-36 26 946.

Es hat sich gezeigt, daß insbesondere in Rohrleitungen durch die extrem hohe Ausbreitungsgeschwindigkeit von Druckwellen, die sich in Rohrleitungen regelmäßig nur in eine Richtung ausbreiten können, die zuletzt genannten Einrichtungen noch verbesserungsfähig sind, insbesondere, was die Gestaltung des Klappdeckels selbst betrifft.

Aufgabe der Erfindung ist es, einen derartigen Klappdeckel noch leichter zu gestalten, so daß er insbesondere in noch größerer Geschwindigkeit ohne Zerstörung in Öffnungsstellung durch die Druckwelle bewegbar ist.

Mit einer Vorrichtung der eingangs bezeichneten Art wird diese Aufgabe gemäß der Erfindung dadurch gelöst, daß die der ebenen Außenfläche gegenüberliegende, zum Auslaßstutzeninneren weisende Innenfläche des Klappdeckels als Kugelkalotte gewölbt ausgebildet ist, die den Hohlraum des Klappdeckels umschließenden Wände aus dünnen Leichtmetallblechen gebildet sind und das Innenblech mit einem eine Punktverschweißung mit dem Außenblech ermöglichenden Befestigungsrand ausgerüstet ist, wobei der Befestigungsrand außen umlaufend mit einem Dichtsteg versehen ist. Die erfindungsgemäßen Gestaltungsmerkmale dienen in besonderer Weise der Optimierung einer derartigen Deckelkonstruktion, insbesondere dem hier im Vordergrund stehenden Leichtbau bei gleichzeitiger Widerstandsfähigkeit gegen die auf einen entsprechenden Deckel im Extremfalle einwirkenden Kräfte. Die kugelkalottenartige Gestaltung der Innenfläche des Deckels dient der Stabilität und der Widerstandsfähigkeit gegen die auftreffenden Druckwellen, die dünnen Leichtmetallbleche bewirken eine erhebliche Gewichtseinsparung und die Randgestaltung durch diese Bleche selbst führen zur notwendigen Stabilität, ohne daß etwa zusätzliche randbildende Profile vorgesehen sein müßten.

Weitere Vorteile der Erfindung ergeben sich aus den weiteren Unteransprüchen. So kann zweckmäßig der Hohlraum des Klappdeckels mit einem Isolierschaumstoff ausgeschäumt sein, der Deckel kann zusätzlich mit einem Scharnierblech ausgerüstet sein und/oder mit einer Heizeinrichtung u. dgl. mehr.

Nach der Erfindung kann auch vorgesehen sein, die Innen- und Außenfläche des Klappdeckels thermisch zu trennen, z.B. unter Zwischenlage eines Kunststoffisolierringes gegeneinander zu vernieten oder zu verkleben. Es ist insbesondere dann zweckmäßig, wenn die Entstehung von Schwitzwasser vermieden werden soll.

Vorteilhaft ist es auch, die erfindungsgemäße Vorrichtung mit Dämpfungselementen für den sich öffnenden Klappdeckel auszurüsten, wie diese in den oben schon genannten Systemen nach der DE-A-31 06 138 oder der DE-A-36 26 946 beschrieben sind.

Nach der Erfindung ist auch vorgesehen, daß der Auffangteller mit einer Klemmfederzunge zur Fixierung des aufgeschwenkten Deckels im Öffnungsfall versehen ist, um ein Zurückschwenken des Deckels in unkontrollierter Weise zu verhindern. Auch wird durch die Fixierung in Öffnungsstellung nach einem Explosionsfall erreicht, daß von außen dieser Störfall durch den geöffneten und offen gehaltenen Deckel optisch erkennbar ist.

Die Erfindung ist nachstehend anhand der Zeichnung beispielsweise näher erläutert, diese zeigt in
- Fig. 1: eine Seitenansicht der Vorrichtung, teilweise geschnitten,
- Fig. 2: eine Aufsicht gemäß Pfeil II in Fig. 1 sowie in
- Fig. 3a bis 3c: einen Teil des erfindungsgemäßen Deckels mit einem Teil des Auffangtellers, wobei der Deckel in drei unterschiedlichen Positionen relativ zum Auffangdeckel vereinfacht dargestellt ist.

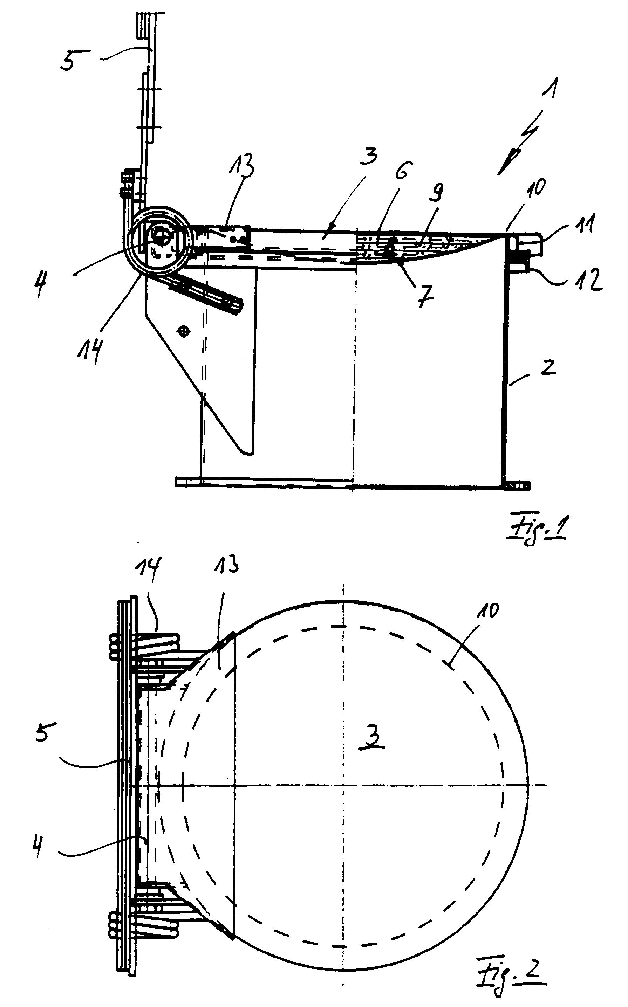

Die in den Figuren allgemein mit 1 bezeichnete Vorrichtung weist einen Auslaßstutzen 2 auf, der beispielsweise an ein Entlastungsrohrstück einer Rohrleitung anflanschbar ist. Dieser Auslaßstutzen 2 ist mit einem allgemein mit 3 bezeichneten Klappdeckel ausgerüstet, der um eine Schwenkachse 4 im Falle einer Druckbeaufschlagung, z.B. durch eine Explosion oder Verpuffung in der Rohrleitung gegen einen gefederten Auffangteller 5, der in Fig. 1 nur bereichsweise dargestellt ist, aufschwenkbar ist.

Der Klappdeckel 3 ist als Hohlkörper ausgebildet, d.h. er weist eine ebene Außenfläche 6, z.B. aus 2 mm starkem Aluminiumblech, auf und eine kugelkalottig gewölbte Innenfläche 7, wobei der mit 8 bezeichnete Hohlraum zwischen Innenfläche 7 und Außenfläche 8 mit einem Kunststoffschaum 9 ausgeschäumt ist.

Außenfläche 6 und Innenfläche 7 können an die auch in Fig. 2 gestrichelt angedeutete Berührungslinie 10 durch Punktverschweißung miteinander verbunden sein, hier kann aber auch ein zwischengelegter Isolierring zum thermischen Trennen vorgesehen sein, derart, daß Außenfläche 6 und Innenfläche 7 und dieser Isolierring miteinander vernietet oder miteinander verklebt sind, was nicht näher dargestellt ist. Das die Innenfläche 7 bildende Blech weist einen den Außlaßstutzen 2 außen umgreifenden Dichtsteg 11 auf, der von oben in eine Ringdichtung 12 greift, die den Auslaßstutzen 2 außen umgibt.

Im Bereich der Schwenkachse 4 ist der Klappdeckel 3 mit einem diesen bereichsweise außen übergreifenden Scharnierblech 13 versehen, welches auch wenigstens bereichsweise als Tasche ausgebildet sein kann, in die der Klappdeckel 3 eingreift.

In den Fig. 1 und 2 ist noch dargestellt, daß der Auffangteller 5 mittels Spiralfedern 14 federnd gelagert ist, nicht näher dargestellt ist die Möglichkeit, den Klappdeckel 3 mit einer zusätzlichen Heizeinrichtung auszurüsten.

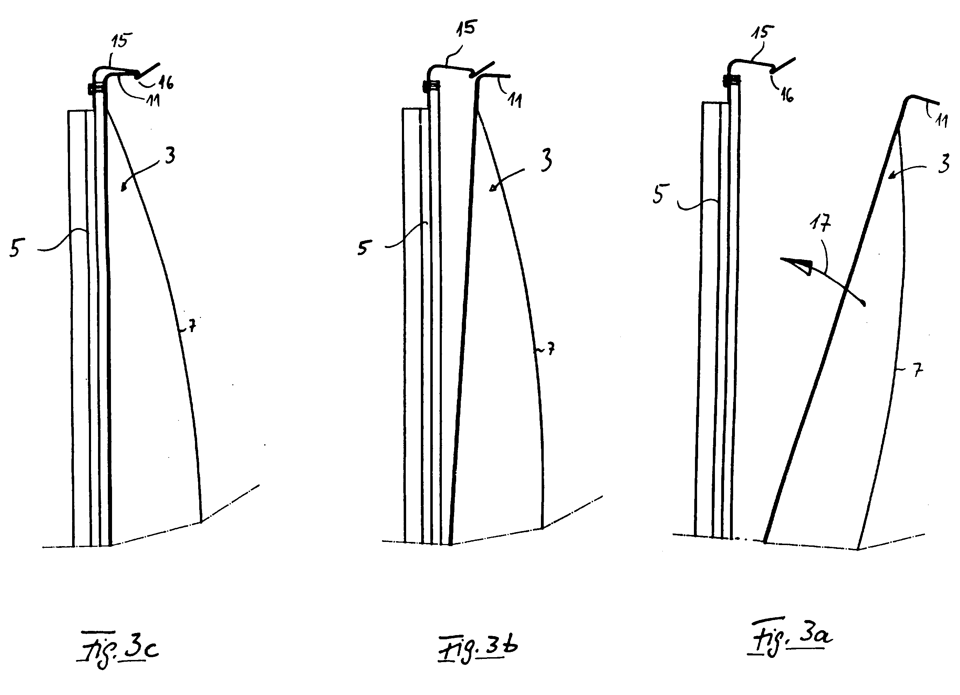

In den Fig. 3a bis 3c ist der Klappdeckel 3 in unterschiedlichen Positionen relativ zu dem gefederten Auffangteller 5 wiedergegeben. Dabei ist aus den Figuren erkennbar, daß der gefederte Auffangteller 5 im dargestellten Beispiel im oberen Bereich mit einer Klemmfederzunge 15 ausgerüstet ist, die mit dem Rand 11 des Deckels 3 in der Weise zusammenwirkt, daß der Rand 11 unter die Zunge 15 schwenken kann durch einen nasenartigen Ansatz 16 aber in der Öffnungsstellung fixierbar ist.

Die unterschiedlichen Schwenkpositionen sind in den Fig. 3a bis 3c dargestellt, wobei in Fig. 3a der Deckel 3 noch vergleichsweise weit vom Auffangteller 5 entfernt ist, die Aufschwenkrichtung ist mit einem Pfeil 17 angedeutet. In Fig. 3b ist der Deckel 3 kurz vor Berührung mit der Klemmfederzunge 15, während in Fig. 3c die Raststellung dargestellt ist, d.h. der Deckel 3 ist am Auffangteller 5 in Öffnungsstellung durch die Klemmfederzunge 15 bzw. den Klemmansatz 16 fixiert.

## Patentansprüche

1. Vorrichtung (1) zum Ausgleich von Druckstößen bei möglichen Staub- oder Gasexplosionen in geschlossenen Systemen, wie Silos, Rohrleitungen od. dgl., mit einem um eine Schwenkachse (4) an einem Auslaßstutzen (2) verschwenkbaren Klappdeckel (3), der wenigstens bereichsweise als Hohlkörper ausgebildet ist und eine ebene Außenfläche (6) aufweist, wobei die den Klappdeckel (3) bildenden Wände (6,7) aus dünnen Metallblechen gebildet sind,
dadurch gekennzeichnet,
daß die der ebenen Außenfläche (6) gegenüberliegende, zum Auslaßstutzeninneren weisende Innenfläche (7) des Klappdeckels (3) als Kugelkalotte gewölbt ausgebildet ist, die den Hohlraum des Klappdeckels (3) umschließenden Wände (6,7) aus dünnen Leichtmetallblechen gebildet sind und das Innenblech (7) mit einem eine Punktverschweißung mit dem Außenblech ermöglichenden Befestigungsrand ausgerüstet ist, wobei der Befestigungsrand (10) außen umlaufend mit einem Dichtsteg (11) versehen ist.

2. Vorrichtung nach Anspruch 1,
dadurch gekennzeichnet,
daß der Hohlraum (8) des Klappdeckels (3) mit einer Isolierung (9), insbesondere einer Ausschäumung, versehen ist.

3. Vorrichtung nach Anspruch 1 oder 2,
dadurch gekennzeichnet,
daß im Bereich der Schwenkachse (4) der Klappedeckel (3) mit einem zusätzlichen Scharnierblech (13) versehen ist.

4. Vorrichtung nach Anspruch 3,
dadurch gekennzeichnet,
daß das Scharnierblech (13) etwa taschenförmig ausgebildet ist.

5. Vorrichtung nach Anspruch 1 oder einem der folgenden,
dadurch gekennzeichnet,
daß der Klappdeckel (3), insbesondere der Klappdeckelhohlraum, mit einer Heizeinrichtung ausgerüstet ist und/oder daß Innenfläche (7) und Außenfläche (6) des Klappdeckels (2) thermisch getrennt sind.

6. Vorrichtung nach einem der vorangehenden Ansprüche,
dadurch gekennzeichnet,
daß sie, wie an sich bekannt, mit einem mittels elastischer Elemente mit dem Auslaßstutzen (2) verbundenen Auffangteller (5) versehen ist, wobei die im Öffnungsfall aufeinander zustrebenden Flächen des Klappdeckels (3) und des Auffangtellers (5) eben ausgebildet sind.

7. Vorrichtung nach einem der vorangehenden Ansprüche,
dadurch gekennzeichnet,
daß der Auffangteller (5) mit einer Klemmfederzunge (15) zur Fixierung des aufgeschwenkten Deckels (3) im Öffnungsfall versehen ist.

## Claims

1. Device (1) for compensating for pressure surges due to potential dust or gas explosions in enclosed systems such as silos, pipelines etc., comprising a hinged cover (3) which can be pivoted about a swivel axis (4) on an outlet connection (2) and which is designed at least to an extent in the form of a hollow body and has a flat outer face (6), the sides (6, 7) forming the hinged cover (3) being made out of thin metal sheets,
characterised in that
the inner face (7) of the hinged cover (3) which is opposite the flat outer face (6) and faces the inside of the outlet connection is dished in the form of a spherical segment, the sides (6, 7) surrounding the hollow space of the hinged cover (3) are made out of thin, light metal sheets and the inner plate (7) is fitted with a mounting flange which allows it to be spot welded to the outer plate, the mounting flange (10) being provided with a sealing fillet (11) which goes round the outside.

2. Device according to Claim 1,
characterised in that
the hollow space (8) in the hinged cover (3) is provided with insulation (9), more especially foam insulation.

3. Device according to Claim 1 or 2,
characterised in that
in the area of the swivel axis (4), the hinged cover (3) is provided with an additional hinged plate (13).

4. Device according to Claim 3,
characterised in that
the hinged plate (13) is roughly pocket shaped in design.

5. Device according to Claim 1 or one of the subsequent claims
characterised in that
the hinged cover (3), especially the hollow space in the hinged cover, is fitted with a heating facility and/or that the inner face (7) and outer face (6) of the hinged cover (2) are thermally separated.

6. Device according to one of the foregoing claims,
characterised in that
it is, in the known manner, fitted with a cushioning plate (5) which is connected to the outlet connection (2) by means of flexible components, the face of the cushioning plate (5) and the faces of the hinged cover (3) which tend towards each other when said cover is being opened, being flat in design.

7. Device according to one of the foregoing claims,
characterised in that
the cushioning plate (5) is fitted with a clamping spring catch (15) to lock the cover (3) in position when it has been swivelled open.

## Revendications

1. Dispositif (1) destiné à compenser les coups de bélier en cas d'explosion de gaz ou coups de poussière dans des systèmes fermés tels que des silos, canalisations ou analogues avec un couvercle rabattant (3) pivotant autour d'un axe (4) sur une tubulure d'évacuation (2), couvercle rabattant qui est constitué au moins en partie d'un corps creux et comporte une surface extérieure (6) plane, les parois (6, 7) formant le couvercle rabattant (3) étant constituées de tôles métalliques minces,
caractérisé en ce que
la face interne (7) du couvercle rabattant (3), face interne (7) dirigée vers l'intérieur de la tubulure d'évacuation, en opposition à la face externe plane (6) est arquée en forme de calotte sphérique, les parois (6, 7) renfermant la zone creuse du couvercle rabattant (3) sont constituées de tôles métalliques légères minces et la tôle interne (7) est munie d'un bord de fixation permettant le soudage par points avec la tôle externe, le bord de fixation (10) étant muni d'une nervure d'étanchéité périphérique extérieure (11).

2. Dispositif selon la revendication 1,
caractérisé en ce que
la zone creuse (8) du couvercle rabattant (3) est munie d'une isolation (9), en particulier d'un garnissage en mousse.

3. Dispositif selon la revendication 1 ou 2,
caractérisé en ce que
au niveau de l'axe pivotant (4), le couvercle rabattant (3) est muni d'une tôle articulée (13) supplémentaire.

4. Dispositif selon la revendication 3,
caractérisé en ce que
la tôle d'articulation (13) est conçue sensiblement en forme de poche.

5. Dispositif selon la revendication 1 ou l'une des revendications suivantes,
caractérisé en ce que
le couvercle rabattant (3), en particulier la zone creuse du couvercle rabattant, est équipé d'un dispositif de chauffage et/ou en ce que la face interne (7) et la face externe (6) du couvercle rabattant (2) sont isolées thermiquement.

6. Dispositif selon l'une des revendications précédentes,
caractérisé en ce qu'
il est muni, comme cela est connu, d'une plaque de réception raccordée à la tubulure d'évacuation (2) au moyen d'éléments élastiques, de sorte qu'en cas d'ouverture, les faces dirigées l'une vers l'autre du couvercle rabattant (3) et du disque de réception (5) se situent dans le même plan.

7. Dispositif selon l'une des revendications précédentes,
caractérisé en ce que
le disque de réception (5) est muni d'une languette à ressort de friction (15) pour la fixation du couvercle (3) basculé dans le cas de l'ouverture.
